(19) Europäisches Patentamt European Patent Office Office européen des brevets

(11) **EP 2 747 026 B1**

(12) **EUROPEAN PATENT SPECIFICATION**

(45) Date of publication and mention of the grant of the patent:
**16.08.2017 Bulletin 2017/33**

(51) Int Cl.:
*G06T 7/00* (2017.01)    *G06T 7/13* (2017.01)
*G06K 9/46* (2006.01)

(21) Application number: **12198363.9**

(22) Date of filing: **20.12.2012**

(54) **Method for determining the visibility of objects in a field of view of a driver of a vehicle, taking into account a contrast sensitivity function, driver assistance system, and motor vehicle**

Verfahren zur Ermittlung der Sichtbarkeit von Objekten in einem Sichtfeld des Fahrers eines Fahrzeuges mit Berücksichtigung einer Kontrastempfindlichkeitsfunktion, Fahrerhilfssystem und Motorfahrzeug

Procédé pour déterminer la visibilité des objets dans le champ de vision du conducteur d'un véhicule, en tenant compte d'une fonction de sensibilité au contraste, système d'assistance au conducteur et véhicule à moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014 Bulletin 2014/26**

(73) Proprietor: **Valeo Schalter und Sensoren GmbH 74321 Bietigheim-Bissingen (DE)**

(72) Inventors:
• **Joulan, Karine**
 **91730 Chamarande (FR)**
• **Hautiere, Nicolas**
 **94170 Le Perreux sur Marne (FR)**
• **Bremond, Roland**
 **75007 Paris (FR)**
• **Robert-Landry, Caroline**
 **75018 Paris (FR)**

(56) References cited:
 **DE-A1-102007 014 295**

• **KARINE JOULAN ET AL: "A unified CSF-based framework for edge detection and edge visibility", COMPUTER VISION AND PATTERN RECOGNITION WORKSHOPS (CVPRW), 2011 IEEE COMPUTER SOCIETY CONFERENCE ON, IEEE, 20 June 2011 (2011-06-20), pages 21-26, XP031926463, DOI: 10.1109/CVPRW.2011.5981679 ISBN: 978-1-4577-0529-8**
• **BUSCH C ET AL: "Wavelet transform for analyzing fog visibility", IEEE INTELLIGENT SYSTEMS, IEEE SERVICE CENTER, NEW YORK, NY, US, vol. 13, no. 6, 1 November 1998 (1998-11-01), pages 66-71, XP002247567, ISSN: 1094-7167, DOI: 10.1109/5254.736004**

**EP 2 747 026 B1**

**Description**

The invention relates to a method for determining the visibility of objects in a field of view of a driver of a vehicle. An image is captured by means of a camera. By image processing of the image captured by the camera a contrast sensitivity function describing the human visual system is simulated. The contrast sensitivity function indicates threshold values of a contrast perceptible by the human visual system as a function of frequencies. Each frequency indicates a number of alternations of bright and dark areas, wherein the number is related to an angle unit of the field of view. The contrast sensitivity function is approximated by the application of a plurality of differences of filters to the image captured by the camera. The differences of filters are respectively assigned to different frequencies of the contrast sensitivity function. The invention further relates to a driver assistance system configured to perform the method and to a motor vehicle with such a driver assistance system.

Driver assistance systems for motor vehicles are already known from the prior art in various configuration. So-called advanced driver assistance systems (ADAS) use a camera as a sensor. Such a sensor is able to detect sources of danger in front of the own vehicle and from this to estimate a "time to collision" (TTC). However, it poses a problem to adapt such a detection of hazards by means of a camera in such a way that the visibility of the hazard is consistent with its actual perceptibility by the driver.

The document DE 42 01 070 A1 describes a system with an infrared sensor, in which the driver-perceived visibility of objects is taken into account as a function of weather conditions.

The document DE 10 2011 105 074 A1 describes a combination of a camera with a radar sensor, by means of which a visibility range is determined, wherein contrast dimensions are taken into account.

However, it is desirable to determine the visibility of objects in the field of view of the driver as it corresponds to the actual perceptibility by the driver with his visual system, by subjecting the image captured by the camera to image processing. Thus, no additional sensor needs to be provided for determining visibility; instead, merely the already existing camera needs to be resorted to.

In the document: Joulan, K. et al "Contrast Sensitivity Functions for Road Visibility Estimation on Digital Images", IFSTTAR, Paris, France, and in Joulan, K. et al., "A Unified CSF-based Framework for Edge Detection and Edge Visibility", Proc. Computer Vision and Pattern Recognition Workshops (CVPRW), 2001, a method is described in which, by image processing of an image captured by a camera, a contrast sensitivity function (CSF) is simulated, which describes the human visual system. The processing of the image captured by the camera makes it possible - through the use of said camera - to estimate the visibility of objects in road traffic as it appears to the driver. Here, the sensitivity of the human eye is taken into account with respect to the contrast. In this manner, an impression can be obtained of which objects in the image are visible for the driver's eyes and which are not.

The contrast sensitivity of the human eye is determined by the response of retinal cells to light beams which penetrate into the visual system. These retinal cells have different receptor fields which allow us to cover a wide range of object sizes. A contrast sensitivity function simulating the behaviour of the retinal cells describes the response of the human visual system as a function of the frequency of the visual signal. Such contrast sensitivity functions are determined from experimental data which are obtained in a laboratory. A threshold value of a contrast corresponds to each frequency, above which an alternation of light and dark areas is no longer visible to the human eye. These spatial frequencies are expressed in a number of so-called cycles or alternations per degree of the visual angle, wherein a cycle indicates the alternation of a bright and dark area in the form of a black stripe and a white stripe in a grid.

In the method, which is described in the document Joulan, K. et al "Contrast Sensitivity Functions for Road Visibility Estimation on Digital Images", IFSTTAR, Paris, France, a contrast sensitivity function is modelled using a set of differences of Gaussians. The individual differences of Gaussians are here related to individual frequencies of the contrast sensitivity function to be modelled. To approximate the contrast sensitivity function, a sum of weighted differences of Gaussians is formed, wherein the individual differences of Gaussians are applied to the image captured by the camera. As a result, a map of edges of objects on the street, i.e. in the field of view of the driver, is obtained. The visibility of the edges corresponds to what is actually perceptible by the human viewer. The differences of Gaussians related to a particular frequency of the contrast sensitivity function are obtained by applying a first Gaussian filter with a certain width of the Gaussian curve to the image captured by the camera and subsequently a second Gaussian filter with a second width of the Gaussian curve different from the first. These two Gaussian filters are subtracted from each other to obtain a difference of Gaussians.

It is the object of the present invention to provide a method of the initially mentioned type, a driver assistance system configured to perform the method and a motor vehicle, with which the visibility of objects in the field of view of the driver is enabled by means of image processing of the image captured by the camera in a particularly simple and reliable manner.

This object is solved by a method having the features of claim 1, by a driver assistance system having the features of claim 13 and by a motor vehicle having the features of claim 14. Advantageous embodiments with convenient further developments of the invention are specified in the dependent claims.

In the method according to the invention, starting from a first frequency of the contrast sensitivity function at least one of further frequencies is determined on the basis of a predetermined relationship between the first frequency and further frequencies of the contrast sensitivity function. The differences of filters are assigned to the frequencies, respectively. The visibility of an object in the field of view of the driver is determined dependent on the differences of filters. The differences of filters, which are used for approximating the contrast sensitivity function, can therefore be determined particularly easy and with particularly little effort. The further frequencies can in fact be obtained with a considerably reduced computing effort, as soon as the first frequency is determined. Thus, the visibility of objects in the field of view of the driver is determined in a particularly simple manner as it is consistent with the human visual system.

Preferably, the contrast sensitivity function is approximated using a plurality of differences of Gaussians on the image captured by the camera. The Gaussian filter is, after all, an image processing filter which is particularly easy to implement in integrated circuits, for example in a field programmable gate array (FPGA). This filter can thus be easily used in an embedded chip so as to assess the visibility of objects in real time.

Moreover, through the use of differences of Gaussians the response of retinal cells can be modelled especially well, wherein each of the two Gaussian filters represents the response of a centre and of a peripheral region of the individual retinal cell. Indeed, each of these areas of the retinal cell responds to a light stimulus, but in an antagonistic way.

Thus, to obtain the total response of the retinal cell, a modelling of the same by differences of Gaussians seems appropriate, wherein the individual cells of the retina are approximated by a respective linear model in the form of the differences of Gaussians.

To determine from the first and each further frequency of the contrast sensitivity function the width of the individual Gaussian filters which are used to form the differences of Gaussians, first of all the frequency f of the contrast sensitivity function expressed in cycles per degree (cpd) is expressed in cycles per pixel (cpp). This can be done according to the formula:

$$f_{cpp} = \frac{f_{cpd} \times F_{MAxcpp}}{F_{MAxcpd}} \quad,$$

wherein $f_{cpp}$ is the frequency in cycles per pixel, $f_{cpd}$ the frequency in cycles per degree and $F_{MAxcpp}$ and $F_{MAxcpd}$ the maximum number of cycles per pixel and per degree, respectively. Here, $F_{MAxcpp} = 0.5$, since a cycle expressed in pixels comprises at least two pixels, namely an alternation or sequence comprising one black pixel and one white pixel.

A width $s_1$ of the first Gaussian filter can be determined using the following formula:

$$s_1 = \frac{1}{f} \sqrt{\left(\frac{\ln(3)}{2}\right)}$$

expressed in cpd or cpp depending if $f_{cpd}$ or $f_{cpp}$ is used.

The width of the second Gaussian filter $s_2$ is then determined depending on the width $s_1$ of the first Gaussian filter, for example according to the following formula:

$$s_2 = K s_1,$$

wherein K is a constant. The variables $s_1$ and $s_2$ here indicate the width of the Gaussian curve of the individual Gaussian filter at half of its height.

The two Gaussian filters which are used to form a particular difference of Gaussians are preferably determined according to the formula:

$$G_i = e^{-\left(s_i^2 f^2\right)}.$$

The difference between the two resulting Gaussian filters of the widths $s_1$ and $s_2$ respectively then represents the first difference of Gaussians.

Starting from the first frequency of the contrast sensitivity function and dependent on a parameter of the predetermined relationship, the further frequencies of the contrast sensitivity function can be determined, to which the respective differences of filters are assigned. As such, only the parameter needs to be used in order to arrive at the further frequencies starting from the first frequency by applying the predetermined relationship. Thus, determining the further frequencies is particularly easy. Furthermore, the parameter can be chosen, so that the differences of filters corresponding to the frequencies approximate the contrast sensitivity function over a relevant range of frequencies.

Alternatively, it is possible to determine a parameter of the predetermined relationship dependent on the first frequency of the contrast sensitivity function and on a predetermined number of differences of filters, which are to be applied to the image captured by the camera. Thus, it is possible to adapt the parameter, so that an even distribution of the differences of filters to be applied, over the spectrum of frequencies of the contrast sensitivity function can be achieved. As such, it is also especially easy to ensure that the differences of filters, which correspond to the determined frequencies, approximate the contrast sensitivity function over the range of relevant frequencies.

Preferably, the further frequencies are determined as terms of a geometric sequence. Then, the parameter of the predetermined relationship corresponds to the common ratio of the geometric sequence. Thus, it is possible to determine the further frequencies starting from the first frequency with a particularly small effort. This can for example be done according to the formula:

$$\prod_{i=1}^{N} f_i = f_{i-1} (q)^k$$

Here, $f_i$ is the respective frequency of the contrast sensitivity function and q the common ratio of the geometric sequence. This ratio can be constant and in this case, k is a constant, or the ratio q can be different from one frequency to the other while then k is variable, for instance, equal to i. The first frequency, on the basis of which the further frequencies are determined, is $f_0$, accordingly.

Furthermore, it is advantageous, if the differences of filters assigned to the different frequencies are weighted, so that the weighted differences of filters approximate the contrast sensitivity function within a region of the respective frequencies. By weighting the differences of filters, especially the differences of Gaussians, it can be ensured that, by applying the differences of filters, the contrast sensitivity function is reproduced with a particularly high accuracy.

Here, the contrast sensitivity function can in particular be reproduced by a sum of weighted differences of Gaussians. Thus, it is possible to derive from the image captured by the camera the visibility or perceptibility of objects according to the sensory perception of the driver in a particularly realistic way. The weighting factors can be determined iteratively, for instance by use of an estimate determined by the least squares method. This can be done according to the formula:

$$E = \sum_{f=1}^{F} \left( \left( \sum_{i=1}^{N} p_i DOG_i \right) - CSF_f \right)^2$$

Here, $p_i DOG_i$ is the difference of Gaussians, weighted with the weighting factor $p_i$, and CSF is the contrast sensitivity function.

Preferably, in the resulting image obtained by applying the sum of weighted filter differences to the image captured by the camera, visibility levels are determined. To this end, a gradient of the contrast per pixel of the resulting image relative to adjacent pixels is determined. Moreover, in determining the visibility levels an angle of view of the camera is taken into account. Here, the value of the gradient of the pixels is converted in particular into angle units of the angle of view.

The gradient in the pixels of the resulting image provides information about the presence of a sudden change of contrast. In fact, the greater the "slope" of grey values is to adjacent pixels, the more important is the change of contrast between two pixels. For example, to calculate the gradient in a pixel, the respective gradient can be determined in the horizontal direction and in the vertical direction relative to the pixel in the resulting image, i.e. in four directions. From these two gradients the Euclidean norm can then be determined, for example in accordance with:

$$\left\| \vec{\nabla} \right\| = \sqrt{\partial x^2 + \partial y^2} ,$$

wherein $\delta x$ and $\delta y$ specify the respective difference in contrast in the horizontal direction (x) and the vertical direction (y). However, other norms may be used as well, for example the absolute norm or the Mahalanobis norm. Also, the connections to eight adjacent pixels can be taken into account.

The visibility of objects results from the response of a plurality of retinal cells with regard to the perception of contrasts as a function of the size of their receptor fields. A visibility level in a pixel can therefore be calculated as the sum of the responses of the respective filters, in particular Gaussian filters, which simulate the response of these retinal cells. Correspondingly, each value of the gradient of the pixels is related to the angle of view. This can be done according to the formula:

$$VL_{i,j} = \left( \frac{N_{hMAX}}{\theta_{hMAX}} \right) \frac{\left\| \vec{V}_{i,j} \right\|}{2\pi}$$

Here, $VL_{i,j}$ specifies the visibility level per pixel in a 2d space, $N_{hMAX}$ the maximum number of pixels in the horizontal direction of the image captured by the camera, and $\theta_{hMAX}$ the angle of view of the camera in the horizontal direction. As a result, visibility levels are obtained for each pixel of the resulting image.

Preferably, in the resulting image obtained using the visibility level per pixels from the image captured by the camera, contours and/or image points obtained by means of, for example, scale-invariant feature transform (SIFT), are determined as image features. By determining such distinctive image features in the resulting image, no speculations about the geometric nature of the objects in the image need to be made. Such distinctive features in the resulting image are sufficiently significant to be perceived by the human eye.

To detect contours in the resulting image, the non-suppression of Canny algorithm or a another method of selecting edges can be used, for instance. A pixel is considered a contour in this case, if its gradient is greater than or equal to the two interpolated values between two directions, in which the gradient was determined. Besides, its visibility level has to be greater than a predetermined threshold.

A further possibility of identifying significant image features is scale-invariant feature transform (SIFT), which is, for example, described in document US 6,711,293 B1. The points obtained by scale-invariant feature transform, which are also referred to as SIFT points, are interesting in that they are especially robust with respect to a change of scale, to rotations and to changes of intensity.

It has proven to be further advantageous, if by using the scale-invariant feature transform a pyramid of filter differences is created. Filter differences which are related to a respective pyramid level of the pyramid each correspond with different frequencies of the contrast sensitivity function. These different frequencies are defined as terms of a geometric sequence. Thus, a filter pyramid is created that takes into account the contrast sensitivity function. By determining the frequencies as terms of a geometric sequence, the individual pyramid levels of the filter pyramid are particularly easy to determine.

Preferably, in each pyramid level local maxima of visibility levels of individual pixels are determined relative to pixels adjacent to the individual pixel. This ensures that the visibility levels have an influence on the image features to be selected according to the SIFT method.

In particular, the pixels adjacent within the pyramid level in which the individual pixel under consideration is located, pixels adjacent within at least one neighbouring pyramid level and the visible level of the individual pixel under consideration can be considered, in order to determine the local maxima of the visibility levels. For example, 27 pixels may be taken into consideration, i.e. for each pixel its eight neighbours in the same pyramid level and nine neighbouring pixels each in the pyramid level above and below. A pixel is then classified as a SIFT point, if it is at all visible and if its visibility level is greater than that of the neighbouring pixels. Moreover, each visible level is ranked from the lower to the greater visibility value. The visibility value of the individual pixel under consideration has to be between the first and the half index in this ranking in order to be considered as a SIFT point.

Furthermore, within a pyramid level a total level of visibility can be determined. Thus, the contribution to visibility of each retinal cell can be determined and assigned to he SIFT point selected.

It has further turned out to be advantageous, if visibility levels are assigned to the pixels obtained by scale-invariant feature transform, in the determining of which a gradient of a contrast in a respective pixel of the image obtained by applying the filter differences to the image captured by the camera relative to adjacent pixels is taken into account. Moreover, in determining the visibility levels an angle of view of the camera is taken into consideration. Thus, objects perceptible by the driver are obtained in the form of image features, with which individual visibility levels are associated. The visibility levels take into account the contrast sensitivity of the human visual system.

It is also advantageous, if in a resulting image which is obtained by applying the filter differences to the image captured by the camera, visibility levels of the pixels are determined dependent on a specific contrast sensitivity function indicating a typified visual perception of the driver. Thus, it can be taken into account if mesopic or scotopic vision is to be described by the contrast sensitivity function. Alternatively, the perception of objects as it changes with a driver's age and ocular's diseases and they can be taken into account by predetermining a typified contrast sensitivity function. Usual contrast sensitivity functions are built starting from experimental data elaborated with a detection threshold of 50 per cent. Other threshold values can possibly be chosen like 90 per cent (i.e. 9 of 10 detections are visible) to better reflect driving situations. This makes it possible to adapt the contrast sensitivity function to the specific application of driving the vehicle.

Finally, it has proved advantageous if, in dependence on the visibility of the objects in the field of vision of the driver, a reaction time of the driver is determined and in dependence on the determined reaction time at least one functional unit of the vehicle is operated. This is based on the finding that the reaction time depends on the visibility of objects, wherein the reaction time increases if their visibility is poor. Thus, in case of a very short reaction time of the driver, i.e. in case of good visibility, it can be sufficient to simply improve the illumination of the road scene by increasing illumination power coming from the vehicle (within tolerable limits) instead of directly intervening in the driving behaviour of the vehicle. Additionally or alternatively, visibility can be improved by altering the intensity of a wiping movement of wiper blades, if due to the visibility of the objects per se the driver can react comparatively fast. It can also be sufficient to provide the driver with information about a threatening collision with an object, in particular with another motor vehicle. If the reaction time is comparatively short, the driver can then react autonomously to the presence of objects in his field of vision.

If, on the other hand, the driver requires a greater reaction time, driver assistance systems can be activated. Thus, for example, preparations can be made for automatic emergency braking or an automatic collision avoidance manoeuvre. Accompanying warning information can be communicated to the driver.

If the driver requires an especially long reaction time due to a particularly poor visibility of objects, the vehicle can autonomously initiate emergency braking or a collision avoidance manoeuvre by performing the appropriate braking interventions and/or steering interventions by means of a driver assistance system

The driver assistance system for a vehicle according to the invention is configured to perform the method according to the invention. Accordingly, it comprises at least one camera configured to capture images which overlap at least partially with a field of view of the driver. The driver assistance system further comprises an image processing device configured to process the image captured by the camera. In the image processing device at least one contrast sensitivity function is stored, which can be simulated by applying differences of filters, in particular differences of Gaussians, to the image captured by the camera. The corresponding filtering of the image captured by the camera as well as the assignment of the respective differences of filters to different frequencies of the contrast sensitivity function is executed by the image processing device of the driver assistance system. With such a driver assistance system the visibility of objects in the field of view of the driver can be determined in a particularly simple and reliable manner.

The motor vehicle according to the invention comprises a driver assistance system according to the invention. The advantages and preferred embodiments described with respect to the method according to the invention also apply to the driver assistance system according to the invention and to the motor vehicle according to the invention and vice versa.

The features and feature combinations previously mentioned in the description and the features and feature combinations mentioned below in the description of the figures and/or shown in the figures alone are usable not only in the respectively specified combination, but also in other combinations or else alone, without leaving the scope of the invention.

Further advantages, features and details of the invention are apparent from the claims, the following description of preferred embodiments as well as from the figures. Therein show:

Fig. 1 a flow chart illustrating a method of image processing, in which a contrast sensitivity function is approximated in order to deduce the visibility of objects in a field of view of a driver from an image captured by a camera of a vehicle;

Fig. 2 an alternation of black and white stripes as they are used in determining a contrast sensitivity function;

Fig. 3 a part of the flow chart according to fig. 1, wherein individual steps in this part are detailed;

Fig. 4 highly schematized, the camera configured to capture the image in the driver's field of vision, its angle of view and the width of an image sensor of the camera in a horizontal direction;

Fig. 5 a contrast sensitivity function and frequencies of the contrast sensitivity function, which are used for determining differences of Gaussians dependent on these frequencies;

Fig. 6 the contrast sensitivity function approximated by a plurality of weighted differences of Gaussians;

Fig. 7 two graphs illustrating the use of integral images;

Fig. 8 a further part of the flow chart according to fig. 1, wherein individual steps in this part are detailed; and

Fig. 9 a graph for illustrating the detection of contours in the image obtained by applying a sum of differences of Gaussians to the image captured by the camera.

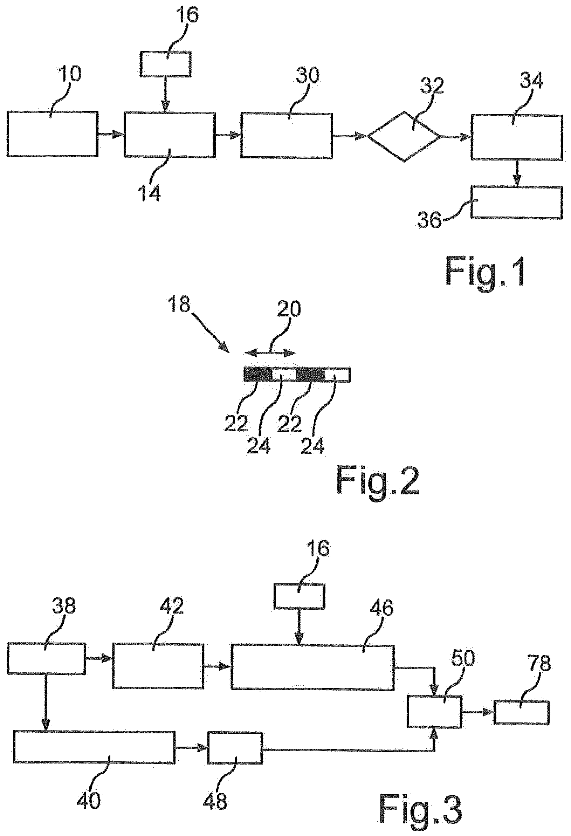

Referring to fig. 1 a method is illustrated, according to which by means of processing an image obtained by a camera positioned in a vehicle the visibility of objects in this image is inferred. A contrast sensitivity function (CSF) is here taken into account, which indicates the threshold values of a contrast perceptible by the human visual system.

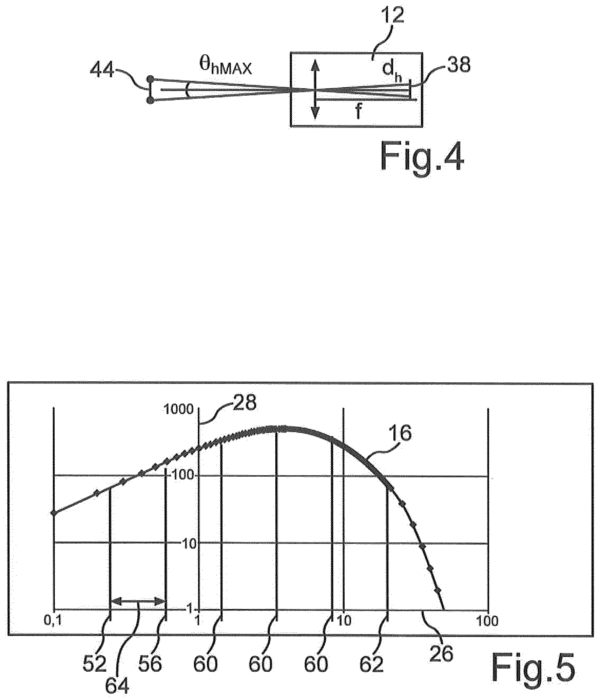

In a first step 10, an image 48 is captured (cf. fig. 3) by means of the camera 12 (cf. fig. 4) which is part of a driver assistance system of the vehicle. In a next step 14, the application of a contrast sensitivity function 16 to the image 48 captured by the camera 12 is performed. The contrast sensitivity function 16 (cf. fig. 5) is a function which describes the human visual system. In order to determine the contrast sensitivity function 16, experimental data are obtained. For this purpose, test persons have to indicate at which threshold of a contrast a grid is no longer visible for the test person.

In fig. 2, such a grid 18 is illustrated, which comprises alternations or cycles 20 of alternating bright and dark areas in the form of black bands 22 and white bands 24.

In fig. 5, the contrast sensitivity function 16 is illustrated as a curve in a logarithmic coordinate system, in which frequencies are plotted on an abscissa 26. These spatial frequencies are expressed as the number of cycles 20 per degree of the visual angle, i.e. in cycles per degree (cpd). On an ordinate 28 in the coordinate system in fig. 5 the reciprocal value of the threshold of the contrast is indicated.

The contrast sensitivity function 16 is thus represented by a curve, which indicates threshold values of the contrast of the human visual system in dependence on cycles 20 per frequency the latter being expressed in degrees of the visual angle. Accordingly, at high frequencies the perceptibility of details of an object decreases. On the other hand, low frequencies indicate the silhouette of the object.

By applying a sum of weighted differences of Gaussians to the image 48 captured by the camera 12, the contrast sensitivity function 16 which describes the human visual system, is approximated. An image 78 (see fig. 3) resulting from this processing is further processed in a next step 30 (see fig. 1). This is done with the aim of identifying distinctive image features in the image 78 processed in accordance with the contrast sensitivity function 16. In step 30 visibility levels are assigned to these image features. In a subsequent query 32 it is determined, whether the identified visibility levels are greater than a predetermined threshold. If such is the case, a map 34 is obtained as an output, in which the image features with visibility levels above the threshold are indicated. This map 34 is then used in a subsequent step 36 to e.g. operate functional units of the vehicle in dependence on the visibility of the objects in the field of view of the driver and thus to prevent a collision of the vehicle with objects, in particular with other vehicles.

The method, accordingly, takes into account the sensitivity of the human eye with regard to contrasts by taking into account a model of the human visual system, namely the contrast sensitivity function 16, in the processing of the image 48 captured by the camera 12.

The aim in step 14 of fig. 1 is thus to apply the contrast sensitivity function 16 to the image 48 captured by the camera 12 such that objects in the road scene are identified, which have a contrast great enough to be perceived by the human visual system. In other words, the image 48 captured by the camera 12 is filtered by means of a contrast sensitivity function 16, by applying the contrast sensitivity function 16 to each picture element or pixel of the image 48. There are different contrast sensitivity functions which can be used here. There are, for example, chromatic contrast sensitivity functions, achromatic contrast sensitivity functions or contrast sensitivity functions which take into account the age of the observer of a scene such as the traffic situation.

However, an image sensor 38 (cf. fig. 3) of the camera 12 does not necessarily have the same bandwidth of frequencies which are covered by the contrast sensitivity function 16. Thus, presently the contrast sensitivity function 16 is parameterised, namely dependent on the image sensor 38 of the camera 12.

The contrast sensitivity function 16 expresses interdependencies in the frequency domain. By contrast, the image 48 captured by the camera 12 is situated in the spatial domain. In order to apply the contrast sensitivity function 16 to the image 48, it is thus envisaged to use a common reference system, either a frequency-based or a spatial one. However, the contrast sensitivity function can be also applied as wavelet function on the image 48 captured by the camera 12.

The contrast sensitivity function 16 can here be synthesized as a spatial filter by applying it to the image 48 captured by the camera 12. However, the image 48 can also be transferred into the frequency domain, e.g. by discrete Fourier transform. Subsequently, the contrast sensitivity function 16 can be applied to this image. It is presently preferred to approximate the contrast sensitivity function 16 by means of spatial filters, namely differences of Gaussians. Gaussian filters and differences of Gaussians being linear functions are indeed particularly easy to use and to implement by means of standard chips within e.g. some Electronic control unit.

The taking into account of the properties of the image sensor 38 of the camera 12 is illustrated with reference to fig. 3. First of all, the image sensor 38 is calibrated 40. In this calibration and normalisation the luminance is taken into consideration. The image sensor 38 of the camera receives information derived from a photometric signal from the road scene and transforms this information into the image 48 by the step 40 of the fig. 3. First, the information from the image sensor 38 is linearised and normalised in order to obtain the image 48. There are various ways of linearising the input signal, which, however, will not be detailed here. The visibility of an object depends to a particularly large extent on the brightness or luminance, to which the human eye is adapted. This brightness is presently taken into consideration in the image processing. Also, a normalisation is performed and the input image is linearised with regard to the average brightness of the image according to the formula:

$$I(i,j) = \frac{I^*(i,j)}{\dfrac{1}{N_{hMAX} N_{vMAX}} \displaystyle\sum_{i=0}^{N_{hMAX}} \sum_{j=0}^{N_{vMAX}} I(i,j)} \; ,$$

wherein I specifies the brightness per pixel in the image 48, $N_{hMAX}$ the number of pixels of the image 48 captured by the camera 12 in a horizontal direction and $N_{vMAX}$ the number of pixels of the captured image 48 in a vertical direction.

In a further step 42 the properties of the image sensor 38 are taken into consideration. Experiments carried out in a laboratory in order to establish contrast sensitivity functions 16 show that the maximum frequency at which the human eye is still able to perceive small objects is at about 35 cpd on average. In order to determine a maximum and a minimum resolution in cpd of the image sensor 38, the angle of view $\theta_h$ of the camera 12 is taken into consideration in dependence on the focal length f of the objective of the camera 12 and on the size $d_h$ of the image sensor 38 in millimetres (see fig. 4) according to the formula:

$$\theta_h = 2 \arctan\left(\frac{d_h}{2f}\right).$$

The maximum horizontal dimension $d_{hmax}$ of the image sensor 38 corresponds to the maximum number $N_{hMAX}$ of pixels in a horizontal direction of the image 48 captured by the camera 12. The size $d_p$ of a pixel (in millimetres) is then obtained in accordance with:

$$d_p = \left(\frac{d_{hMAX}}{N_{hMAX}}\right) \; .$$

Considering that a cycle 20 extends over two pixels, i.e. the alternation of a black stripe 22 and a white stripe 24 (cf. fig. 2)), the minimum resolution $rc_{mincpd}$ of the camera 12 can then be determined according to the following ratio:

$$rc_{mincpd} = \frac{1}{\theta_{hMAX}}$$

The maximum resolution $rc_{maxcpd}$ of the camera 12 can be determined according to the following ratio:

$$rc_{maxcpd} = \frac{N_{hMAX} / \theta_{hMAX}}{2}$$

For explanatory purposes, reference is made to fig. 4, according to which an object 44 is captured under the maximum angle of view $\theta_{hMAX}$ and reproduced on the image sensor 38 with the maximum width $h_{max}$.

This resolution of the camera 12 strictly applies only if the phenomenon of light diffraction is ignored, since the latter causes a defocusing of the light rays on the image sensor 38 and leads to the reproduction of a stain rather than a well-defined point in the image 48 outputted by the camera 12. At a given wavelength A, for instance $\lambda=550nm$, a diameter $\sigma$ of such a stain is proportional to the aperture number N of the lens aperture of the camera 12 in accordance with:

$$\sigma = 2{,}44\ \lambda\ N.$$

In such a case, the diameter $\sigma$ of the stain is taken into account rather than the size $d_p$ of a pixel in order to determine the maximum resolution $rc_{maxcpd}$ of the image sensor 38 in accordance with:

$$rc_{maxcpd} = \frac{d_{hMAX}}{2\sigma\theta_{hMAX}}.$$

After the properties of the image sensor 38 have thus been taken into account, in a step 46 (cf. fig. 3) the approximation of the contrast sensitivity function 16 is performed. For this purpose, the image 48 is captured with the photometrically calibrated camera 12 and processed in a further step 50, in which the contrast sensitivity function 16 approximated by a sum of differences of Gaussians is applied to the image 48. First, however, the method which mimics the contrast sensitivity function 16 according to step 46 in fig. 3 is to be explained.

In step 46 a plurality of Gaussian filters are used, which are grouped into pairs of differences of Gaussians DoG. From these differences of Gaussians DoG a sum SDoG is formed, which is the sum of the individual differences of Gaussians DoG in accordance with:

$$SDOG = \sum_{i=1}^{N} DoG_i.$$

This sum filter SDoG describes a behaviour which comes very close to the response of the retinal cells of the human eye, which are responsible for contrast perception. A respective Gaussian filter which is applied to the image 48 is characterized by its width s halfway up the Gaussian curve. In order to obtain a difference of Gaussians DoG, two Gaussian filters with differing widths $s_1$, $s_2$ are subtracted from each other.

Any desired contrast sensitivity functions 16 can be approximated by such a plurality of differences of Gaussians DoG. To accomplish this, the mechanism of certain retinal cells, which are sensitive with regard to a change of contrast in the observed scene, is taken into account. The theories concerning the human visual system suggest that the contrast sensitivity function 16 is not the response of a single individual retinal cell, but of a plurality of cells with differing sizes of a respective receptor field of said cells. These receptor fields are sensitive with regard to the silhouette of an object or to its details. The retinal cells are presently approximated by a linear model, i.e. by the differences of Gaussians DoG. Each single Gaussian filter of a difference of Gaussians DoG represents the response of one of the two regions of a retinal cell, namely of a centre and a periphery. The total response of a retinal cell is modelled by a respective difference of Gaussians DoG. In order to simulate the response of a plurality of retinal cells, the sum SDoG of the differences of Gaussians is used.

The two Gaussian filters of a difference of Gaussians DoG are assigned to a frequency $f_{cpd}$ of the contrast sensitivity functions 16, which in this case is less than the maximum resolution $rc_{maxcpd}$ of the image sensor 38. This frequency $f_{cpd}$ is converted into the unit cpp (cycles per pixel) according to the following formula:

$$f_{cpp} = \frac{f_{cpd} \times F_{MAxcpp}}{F_{MAxcpd}},$$

wherein $f_{cpp}$ denotes the frequency in cycles 20 (cf. fig. 2) per pixel, $f_{cpd}$ the frequency in cycles 20 per degree and $F_{MAxcpp}$ and $F_{MAxcpd}$ the maximum number of cycles 20 per pixel and per degree, respectively. $F_{MAxcpp} = 0{,}5$, since a cycle expressed in pixels comprises at least two pixels.

The individual widths $s_1$, $s_2$ of the two Gaussian filters used to establish the respective difference of Gaussians DoG are determined according to the following equations:

$$s_1 = \frac{1}{f}\sqrt{\left(\frac{\ln(3)}{2}\right)}$$

and

$$s_2 = Ks_1 ,$$

wherein K is a constant. It should be noted that the individual width $s_1$, $s_2$ is less than the resolution of the image 48.

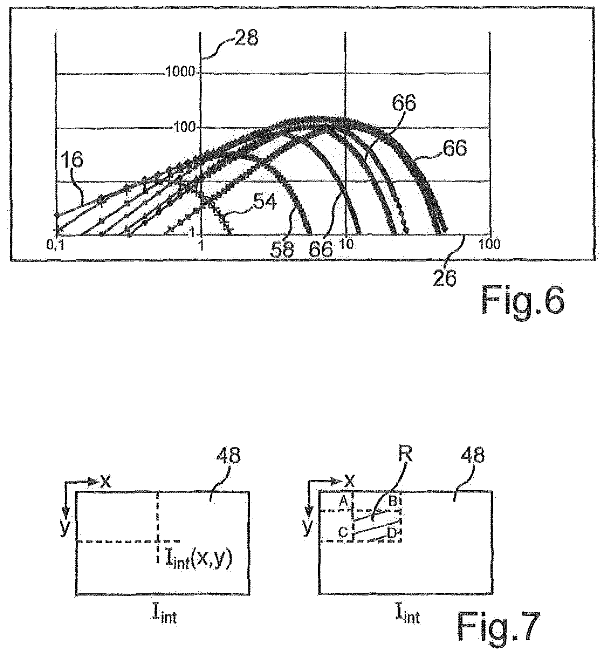

It is illustrated in fig. 5 and fig. 6 how the frequencies are determined, to which the respective differences of Gaussians DoG correspond, which are used to approximate the contrast sensitivity function 16.

In a first step a first frequency 52 of the contrast sensitivity function 16 is determined, at which the contrast sensitivity function 16 has a maximum. This frequency 52, which is expressed in cpd, is converted into the unit cpp as described above. Then the individual widths $s_1$, $s_2$ of the first Gaussian filters are determined as previously described. Based on the respective widths $s_1$, $s_2$ the two Gaussian filters of the first difference of Gaussians DoG are determined in accordance with:

$$G_i = e^{-\left(s_i^2 f^2\right)}$$

wherein $G_i$ is the individual Gaussian filter. The difference between these two Gaussian filters $G_1$, $G_2$ then determines the first difference of Gaussians $DoG_1$. This first difference of Gaussians $DoG_1$ is weighted with a factor $p_1$, so that the first difference of Gaussians $DoG_1$ approximates the value of the contrast sensitivity function 16 at the first frequency 52. The weighted first difference of Gaussians $DoG_1$ is illustrated in fig. 6 by the reference sign 54.

The factor $p_1$ is the weighting factor used to approximate the contrast sensitivity function 16 in the range of the first frequency 52. By weighting the first difference of Gaussians $DoG_1$ with the factor $p_1$ the weighted first difference of Gaussians 54 comes to lie on the contrast sensitivity function 16 in the range of the frequency 52 (cf. fig. 6).

In order to obtain the further frequencies based on the initial frequency $f_0$ it is possible to determine the further frequencies as terms of a geometric sequence. This is presently done according to the formula:

$$\sum_{i=1}^{N} f_i = f_{i-1}(q)^k$$

with $f_i$ being the respective further frequency of the contrast sensitivity function 16 and q being the common ratio of the geometric sequence. This ratio can be constant and in this case, k is a constant, or the ratio q can be different from one frequency to the other while then k is variable, for instance, equal to i.

A further frequency 56, which has been obtained in that manner is illustrated in fig. 5. Then the breadth $s_1$ and the breadth $s_2$ of two Gaussian filters are determined, as described above, which belong to this further frequency 56. A second difference of Gaussians $DoG_2$ is obtained based on these two Gaussian filters which correspond to the further frequency 56. The second difference of Gaussians $DoG_2$ is weighted. With the weighted difference of Gaussians 58 obtained this way, which is assigned to the further frequency 56, the contrast sensitivity function 16 is approximated in the region of this further frequency 56. This is illustrated in fig. 6.

By using the geometric sequence further frequencies 60, 62 are determined analogously, wherein attention is paid that the frequency 62, which is determined last, is not higher than the maximum frequency $rc_{maxcpd}$. By using the geometric sequence as a predetermined relationship between the initial frequency $f_0$ or the first frequency 52 and the further frequencies 56, 60, 62, a specified distance 64 between the individual frequencies is achieved, which leads to an equidistant arrangement of the frequencies 52, 56, 60, 62 in the illustration of fig. 5.

In particular the constant K can be used as the common ratio q of the geometric sequence, which is used for determining the breadth $s_2$ based on the previously determined breadth $s_1$ according to $s_2 = Ks_1$. Then, the first frequency 52 or initial frequency is preset and the further frequencies 56, 60, 62 are determined as described above.

Alternatively, the first frequency 52 and a predetermined number of differences of filters, especially differences of Gaussians can be provided. Then, the common ratio q can be determined, taking the maximum frequency $rc_{maxcpd}$ into consideration.

Thus for each frequency 52, 56, 60, 62 the individual differences of Gaussians DoG are determined and weighted and from the weighted differences of Gaussians DoG the sum of the differences of Gaussians SDoG is formed. Differences of Gaussians DoG related to a frequency which is greater than the maximum resolution $rc_{maxcpd}$ of the image sensor 38 are not considered.

In fig. 6 further weighted differences of Gaussians 66 are illustrated, which are assigned to one of the further frequencies 60, 62 respectively.

The contrast sensitivity function 16 is thus reconstructed by a group, i.e. a sum of weighted differences of Gaussians SDoG. Here, the weighting factors $p_i$ can be iteratively determined, by determining an estimate E by the least squares method. This can for example be done according to the formula:

$$E = \sum_{f=1}^{F} \left( \left( \sum_{i=1}^{N} p_i DOG_i \right) - CSF_f \right)^2.$$

Here, $p_i DOG_i$ are the differences of Gaussians, which are weighted with the weighting factor $p_i$, and the CSF is the contrast sensitivity function 16.

Fig. 6 illustrates how the contrast sensitivity function 16 is approximated by the group of individual differences of Gaussians DoG by forming the sum of the weighted differences of Gaussians $p_i DOG_i$. In fig. 6 the individual weighted differences of Gaussians $p_i DOG_i$ are illustrated by a series of individual curves 54, 58, 66.

The application of the differences of Gaussians DoG to the image 48 in step 50 is carried out, as illustrated in fig. 3, after the contrast sensitivity function 16 has been approximated by the sum SDoG of the differences of Gaussians DoG. Thus, after the individual Gaussian filters of the differences of Gaussians DoG have been determined, each Gaussian filter is applied to each pixel of the image 48. By repeatedly applying this process to the already filtered individual image the resulting image 78 is obtained (cf. fig. 3).

This filtering is repeated as often as corresponds to the number of differences of Gaussians DoG, which have been used to form the sum SDoG of the differences of Gaussians. Thus, the contrast sensitivity function 16 is modelled by a sum of weighted differences of Gaussians, and this group of differences of Gaussians DoG is applied to the image 48 as a convolution operator. This convolution can be relatively laborious with regard to calculation time, if the size, that is the width $s_1$, $s_2$, of the respective Gaussian filter to be applied to the image 48 is large.

In order to obtain a calculation time that is independent of the size of the Gaussian filter, instead of the differences of Gaussians DoG the differences of integral images can be used as filter differences. With the so-called integral images, the value in a pixel with the coordinates x and y is equal to the sum of all pixels which are located above and left of the pixel in the original image 48 captured by the camera 12. This is shown on the left in fig. 7.

The size of a filter which uses integral images then corresponds to the size of a window R, which is centred in each pixel of the image 48. With a first integral image a window $R_1$ with a size $s_1$ is used and with the second integral image a window $R_2$ with a size $s_2$. The individual size of the windows $R_1$, $R_2$ can be obtained through an inclusion exclusion procedure according to the equation:

$$R = D + A - (B + C),$$

wherein A, B, C and D are the values of the integral image at the coordinates $x_a$, $y_a$ of a point A, the coordinates $x_B$, $y_B$ of a point B, the coordinates $x_C$, $y_C$ of a point C and the coordinates $x_D$, $y_D$ of a point D (see the right figure in fig. 7). Thus, by selecting different sizes of the windows R, a filter difference can be provided, wherein the sizes $s_1$, $s_2$ of the windows $R_1$, $R_2$ can be determined, as previously described, dependent on the frequency of the contrast sensitivity function 16.

In a pixel with the coordinates x, y the convolution is then performed by means of a filter having the size s by forming the product of the image with the value of the window R, which is centred in this pixel.

If the contrast sensitivity function 16 is to be applied to an image transformed into the frequency domain, steps 40 and 42 in fig. 3 are changed. The convolution is then replaced by a product and the contrast sensitivity function 16 can either be modelled by the filter SDoG in the frequency range, or the contrast sensitivity function 16 is directly implemented. This may be carried out according to the scheme:

$$I \rightarrow FFT\,(I) \rightarrow CSF\,(FFT\,(I)) \rightarrow FFT^{-1}\,(CSF(FFT(I))),$$

wherein I denotes the image captured by the camera 12, FFT a fast Fourier transform and CSF the contrast sensitivity function 16.

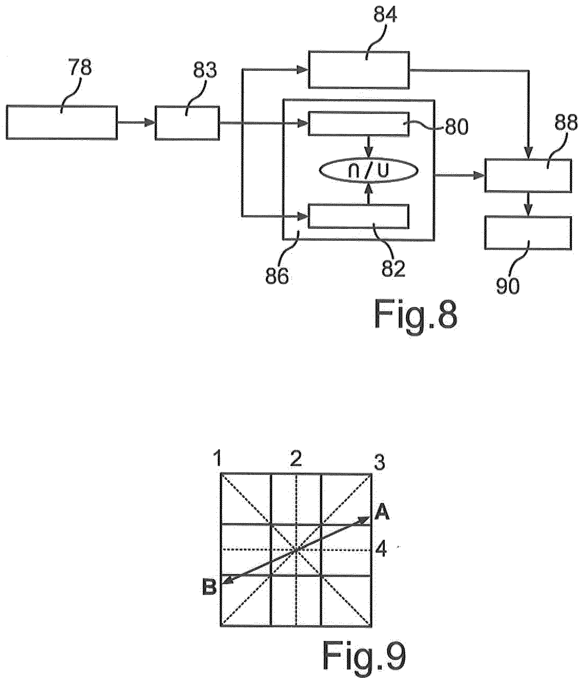

The resulting image 78 obtained in accordance with the above explanations concerning fig. 3 is used, as explained below with reference to fig. 8, to determine visibility levels in the resulting image 78.

For this purpose, contours 80 and/or so-called SIFT points 82 (SIFT = scale-invariant feature transform) are identified in the image 78. Such image features are after all sufficiently significant in order to be perceived by the human eye. Image features can also be obtained in the frequency range, e.g. by detecting so-called contourlets and/or wedgelets.

In addition, visibility is determined in the resulting image 78 by determining a gradient in this image 78. The gradient is obtained in a step 83 (see fig. 8). In the image 78 the gradient is for example selected in the horizontal and vertical direction and determined in four directions in each pixel of the image 78. The gradient is then obtained as follows:

$$\left\|\vec{\nabla}\right\| = \sqrt{\partial x^2 + \partial y^2}$$ , wherein $\partial x$ and $\partial y$ specify the respective gradient in a horizontal and a vertical direction.

In a next step 84 a visibility level VL is determined per pixel (i, j). This is performed as follows:

$$VL_{i,j} = \left(\frac{N_{hMAX}}{\theta_{hMAX}}\right)\frac{\left\|\vec{\nabla}_{i,j}\right\|}{2\pi}.$$

Thus, for each value of the gradient a value in degrees of the angle of view is determined.

The determining of the image features, e.g of the contours 80 and/or the SIFT points 82, takes place in a step 86. In order to determine the contours 80 as significant image features, the previously determined gradient can be used. In this case, the gradient is interpolated between two directions depending on its respective direction. In fig. 9 the values A, B signify such interpolated values of the gradient. A point is interpreted as a contour, if its gradient is greater than or equal to the values A, B and if its visibility level is greater than a predetermined threshold. Thus, in the resulting image 78 maxima of the gradients are determined, which are related to the values of the pixels in the area. A pixel is at all visible only if its visibility level is greater than 1, wherein in a driving situation a threshold of 7 can be given for the visibility level, particularly in order to take into account the visibility of objects at night. Instead of taking into consideration the gradient in determining contours 80, the visibility level VL can also be used.

However, the SIFT points 82 can also be used as significant image features. The determining of SIFT points 82 in an image is described e.g. in the document US 6 711 293 B1. In the present case, this known method of determining SIFT points 82 is modified. According to the SIFT method a filter pyramid is used, namely a pyramid of differences of Gaussians DoG, for which in each pyramid level the resolution in an upward direction is reduced by half. One can imagine these differences of Gaussians DoG as being stacked such that, figuratively speaking, a filter pyramid is established or created, in which the individual differences of Gaussians DoG represent the pyramid levels.

In the present case, also such a filter pyramid is created, in which the individual differences of Gaussians DoG are obtained by assigning the same to frequencies of the contrast sensitivity function 16. The frequencies are obtained starting from a first frequency $f_0$ as follows:

$$\sum_{i=1}^{N} f_i = f_{i-1}(q)^i$$

.

The individual frequencies are thus terms of a geometric sequence with the common ratio q. In this manner, a filter pyramid is created whose individual differences of Gaussians DoG approximate the contrast sensitivity function 16.

Subsequent to the creation of the filter pyramid, the local maxima of each difference of Gaussians DoG are obtained by using the visibility. Thus, for each difference of Gaussians DoG of a pyramid level, which is also referred to as an octave, an image with respective visibility levels VL is created as described above.

As with the well-known SIFT method, a pixel is compared with its neighbours in the same pyramid level and with its neighbours in the pyramid level situated above and below, respectively. In addition, an overall visibility level is determined for a pyramid level. Moreover, each visible level is ranked from the lower to the greater visibility value. The visibility value of the individual pixel under consideration has to be between the first and the half index in this ranking and if its visibility level is greater than 1 and also greater than the visibility level of its 26 neighbours in order to consider a pixel as a SIFT point 82.

After the SIFT points 82 have been identified, each SIFT point 82 is associated with a visibility level present in this point in the resulting image 78. This assigning of visibility levels to significant image features, in particular to the SIFT points 82, occurs in a step 88 (see fig. 8). Thus, in a step 90 visible image features are obtained, on the basis of which a driver's reaction time can then be estimated.

As described above, the visibility of objects in the traffic situation as it appears to the driver of the vehicle equipped with the camera 12 can be estimated in real time through image processing in which the human visual system is taken into account by simulating the contrast sensitivity function 16. Thus, the actual visibility of objects in the image 48 for the human visual system is inferred from the image 48 captured by the camera 12.

This can be used, for example, in order to illustrate visually, e.g. by means of the map 34 (see fig. 1), the differences of the lighting systems in terms of the visibility of objects in the surroundings of the vehicle. For this purpose, a first image is captured with a certain headlight arrangement and with a further headlight arrangement a second image of the road scene of interest is captured. From the respectively captured and processed images, two images or maps 34 with (for example) visible contours of objects are obtained. If these two maps 34 are then superimposed, the quality of the headlight arrangements can be compared. Besides, it is possible to gain an impression of which objects are suffciently visible for the driver.

Furthermore, visible points of interest can be considered in two successively captured images of a video recording of a road scene. Assuming flat surroundings, from these points a subgroup is selected which is part of the road surface. Based on an aggregation of these points a range of vision can then be determined for the moving vehicle as it is perceived by the driver. These visible points of interest can contribute to determine distance of visibility as it corresponds to the actual perceptibility by the driver with his visual system.

## Claims

1. Method for determining the visibility of objects in a field of view of a driver of a vehicle, in which an image (48) is captured by means of a camera (12) and in which by means of image processing of the image (48) captured by the camera (12) a contrast sensitivity function (16) describing the human visual system is simulated, which indicates threshold values of a contrast perceptible by the human visual system in dependence on frequencies (52, 56, 60, 62), wherein a respective frequency (52, 56, 60, 62) indicates a number of alternations (20) of light and dark areas (22, 24) related to an angle unit of the field of view, wherein the contrast sensitivity function (16) is approximated by applying a plurality of differences of filters (54, 58, 66) to the image (48) captured by the camera (12), wherein the differences of filters (54, 58, 66) are assigned to different frequencies (52, 56, 60, 62) of the contrast sensitivity function (16), starting from a first frequency (52) of the contrast sensitivity function (16) at least one further frequency (56, 60, 62) is determined based on a predetermined relationship between the first frequency (52) and the further frequencies (56, 60, 62) of the contrast sensitivity function (16), wherein the respective differences of filters (54,58, 66) are assigned to the frequencies (52, 56, 60, 62) and, dependent on the differences of filters (54, 58, 66), the visibility of an object in the field of view of the driver is determined, while in a resulting image (78) obtained by applying the differences of filters (54, 58, 66) to the image (48) captured by the camera (12) visibility levels are determined by determining a gradient of the contrast per pixel of the resulting image (78) relative to adjacent pixels, **characterized in that** an angle of view ($\theta_{hMAx}$) of the camera (12) is taken into account.

2. Method according to claim 1,
   **characterized in that**
   the contrast sensitivity function (16) is approximated by applying a plurality of differences of Gaussians (54, 58, 66) to the image (48) captured by the camera (12).

3. Method according to claim 1 or 2,
   **characterized in that**
   starting from the first frequency (52) of the contrast sensitivity function (16) and based on a parameter of the predetermined relationship, the further frequencies (56, 60, 62) of the contrast sensitivity function (16) are determined, to which the differences of filters (54, 58, 66) are assigned.

4. Method according to claim 1 or 2,
   **characterized in that**
   starting from the first frequency (52) of the contrast sensitivity function (16) and based on a predetermined number of differences of filters (54, 58, 66) to be applied to the image (48) captured by the camera (12), a parameter of the predetermined relationship is determined.

5. Method according to any one of claims 1 to 4,
   **characterized in that**
   the further frequencies (56, 60, 62) are determined as terms of a geometric sequence.

6. Method according to any one of claims 1 to 5,
   **characterized in that**

the differences of filters (54,58, 66) assigned to the respective different frequencies (52, 56, 60, 62) of the contrast sensitivity function (16) are weighted, so that the weighted differences of filters (54, 58, 66) approximate the contrast sensitivity function (16) in a region of the respective frequencies (52, 56, 60, 62).

7. Method according to any one of claims 1 to 6,
**characterized in that**
in a resulting image (78) obtained by applying the differences of filters (54, 58, 66) to the image (48) captured by the camera (12) contours (80) and/or image points (82) obtained by means of scale-invariant feature transform or by others methods in spatial domain or in wavelet domain are determined as image features.

8. Method according to claim 7,
**characterized in that**
by the scale-invariant feature transform a pyramid of differences of filters is created, wherein the differences of filters assigned to an individual pyramid level correspond to different frequencies of the contrast sensitivity function (16) each, which are determined as terms of a geometric sequence.

9. Method according to claim 8,
**characterized in that**
in each pyramid level local maxima of visibility levels of the pixels are determined relative to pixels adjacent to the respective pixel, in particular within the pyramid level of the respective pixel and within at least one neighbouring pyramid level.

10. Method according to any one of claims 7 to 9,
**characterized in that**
visibility levels are attributed to the pixels (82) obtained by scale-invariant feature transform, in the determining of which a gradient of a contrast in a particular pixel of the image (78) obtained by applying the differences of filters (54, 58, 66) to the image (48) captured by the camera (12) relative to adjacent pixels and an angle of view ($\theta_{hMAx}$) of the camera (12) are taken into consideration.

11. Method according to any one of claims 1 to 10,
**characterized in that**
visibility levels of pixels in a resulting image (78) obtained by applying the differences of filters (54, 58, 66) to the image (48) captured by the camera (12) are determined dependent on a specific contrast sensitivity function (16) which indicates a typified visual perception of the driver.

12. Method according to any one of claims 1 to 11,
**characterized in that**
depending on the visibility of the objects in the field of view of the driver a reaction time of the driver is determined and dependent on the determined reaction time at least one functional unit of the vehicle is operated.

13. Driver assistance system for a vehicle, wherein the driver assistance system is configured to perform a method according to any one of the preceding claims.

14. Motor vehicle having a driver assistance system according to claim 13.


**Patentansprüche**

1. Verfahren zur Ermittlung der Sichtbarkeit von Objekten in einem Sichtfeld eines Fahrers eines Fahrzeugs, bei dem ein Bild (48) mittels einer Kamera (12) erfasst wird und bei dem mittels Bildverarbeitung des von der Kamera (12) erfassten Bildes (48) eine das menschliche Sehsystem beschreibende Kontrastempfindlichkeitsfunktion (16) simuliert wird, die Schwellwerte eines von dem menschlichen Sehsystem in Abhängigkeit von Frequenzen (52, 56, 60, 62) wahrnehmbaren Kontrastes angibt, wobei eine entsprechende Frequenz (52, 56, 60, 62) eine Anzahl von Wechseln (20) von hellen und dunklen Bereichen (22, 24) bezogen auf eine Winkeleinheit des Sichtfeldes angibt, wobei die Kontrastempfindlichkeitsfunktion (16) durch Anwenden einer Vielzahl von Filterunterschieden (54, 58, 66) auf das von der Kamera (12) erfasste Bild (48) angenähert wird, wobei die Filterunterschiede (54, 58, 66) unterschiedlichen Frequenzen (52, 56, 60, 62) der Kontrastempfindlichkeitsfunktion (16) zugewiesen sind, wobei ausgehend von einer ersten Frequenz (52) der Kontrastempfindlichkeitsfunktion (16) wenigstens eine weitere Frequenz (56, 60, 62) anhand einer vorgegebenen Beziehung zwischen der ersten Frequenz (52) und den weiteren Frequenzen (56, 60, 62) der Kontrastempfindlichkeitsfunktion (16) bestimmt wird, wobei die jeweiligen Filterunterschiede (54, 58, 66) den Frequenzen (52, 56, 60, 62) zugewiesen werden und, abhängig von den Filterunterschieden (54, 58, 66), die Sichtbarkeit eines Objekts im Sichtfeld des Fahrers bestimmt wird,
während in einem resultierenden Bild (78), das durch Anwenden der Filterunterschiede (54, 58, 66) auf das von der Kamera (12) erfasste Bild (48) erhalten wird, Sichtbarkeitsstufen bestimmt werden, indem ein Gradient des Kontrastes pro Pixel des resultierenden Bildes (78) relativ zu benachbarten Pixeln bestimmt wird, **dadurch gekennzeichnet, dass** ein Sichtwinkel ($\theta_{hMAX}$) der Kamera (12) berücksichtigt wird.

2.  Verfahren gemäß Anspruch 1,
    **dadurch gekennzeichnet, dass**
    die Kontrastempfindlichkeitsfunktion (16) durch Anwenden einer Vielzahl von Differenzen von Gauß-Funktionen (54, 58, 66) auf das von der Kamera (12) erfasste Bild (48) angenähert wird.

3.  Verfahren gemäß Anspruch 1 oder 2,
    **dadurch gekennzeichnet, dass**
    ausgehend von der ersten Frequenz (52) der Kontrastempfindlichkeitsfunktion (16) und basierend auf einem Parameter der vorgegebenen Beziehung, die weiteren Frequenzen (56, 60, 62) der Kontrastempfindlichkeitsfunktion (16) bestimmt werden, denen die Filterunterschiede (54, 58, 66) zugewiesen sind.

4.  Verfahren gemäß Anspruch 1 oder 2,
    **dadurch gekennzeichnet, dass**
    ausgehend von der ersten Frequenz (52) der Kontrastempfindlichkeitsfunktion (16) und basierend auf einer vorgegebenen Anzahl von Filterunterschieden (54, 58, 66), die auf das von der Kamera (12) erfasste Bild (48) anzuwenden sind, ein Parameter der vorgegebenen Beziehung bestimmt wird.

5.  Verfahren gemäß einem der Ansprüche 1 bis 4, **dadurch gekennzeichnet, dass**
    die weiteren Frequenzen (56, 60, 62) als Terme einer geometrischen Reihe bestimmt sind.

6.  Verfahren gemäß einem der Ansprüche 1 bis 5,
    **dadurch gekennzeichnet, dass**
    die Filterunterschiede (54, 58, 66), die den jeweiligen unterschiedlichen Frequenzen (52, 56, 60, 62) der Kontrastempfindlichkeitsfunktion (16) zugewiesen sind, gewichtet sind, so dass sich die gewichteten Filterunterschiede (54, 58, 66) der Kontrastempfindlichkeitsfunktion (16) in einer Region der jeweiligen Frequenzen (52, 56, 60, 62) annähern.

7.  Verfahren gemäß einem der Ansprüche 1 bis 6,
    **dadurch gekennzeichnet, dass**
    in einem resultierenden Bild (78), das durch Anwenden der Filterunterschiede (54, 58, 66) auf das von der Kamera (12) erfasste Bild (48) erhalten wird, Konturen (80) und/oder Bildpunkte (82), die mittels skaleninvarianter Merkmalstransformation oder durch andere Verfahren in einer räumlichen Domäne oder in einer Wavelet-Domäne erhalten werden, als Bildmerkmale bestimmt werden.

8.  Verfahren gemäß Anspruch 7,
    **dadurch gekennzeichnet, dass**
    durch die skaleninvariante Merkmalstransformation eine Pyramide von Filterunterschieden erzeugt wird, wobei die einer einzelnen Pyramidenebene zugewiesenen Filterunterschiede jeweils unterschiedlichen Frequenzen der Kontrastempfindlichkeitsfunktion (16) entsprechen, die als Terme einer geometrischen Reihe bestimmt sind.

9.  Verfahren gemäß Anspruch 8,
    **dadurch gekennzeichnet, dass**
    in jeder Pyramidenebene lokale Maxima von Sichtbarkeitsstufen der Pixel relativ zu an das jeweilige Pixel angrenzenden Pixeln bestimmt sind, insbesondere in der Pyramidenebene des jeweiligen Pixels und in wenigstes einer benachbarten Pyramidenebene.

10. Verfahren gemäß einem der Ansprüche 7 bis 9,
    **dadurch gekennzeichnet, dass**
    Sichtbarkeitsstufen den durch skaleninvariante Merkmalstransformation erhaltenen Pixeln (82) zugeordnet werden, bei deren Bestimmung ein Gradient eines Kontrastes, relativ zu benachbarten Pixeln, in einem speziellen Pixel des Bildes (78), das durch Anwenden der Filterunterschiede (54, 58, 66) auf das von der Kamera (12) erfasste Bild (48) erhalten wird, und ein Sichtwinkel ($\theta_{hMAX}$) der Kamera (12) berücksichtigt werden.

**11.** Verfahren gemäß einem der Ansprüche 1 bis 10,
**dadurch gekennzeichnet, dass**
Sichtbarkeitsebenen von Pixeln in einem resultierenden Bild (78), das durch Anwenden der Filterunterschiede (54, 58, 66) auf das von der Kamera (12) erfasste Bild (48) erhalten wird, in Abhängigkeit von einer spezifischen Kontrastempfindlichkeitsfunktion (16), die eine versinnbildlichte visuelle Wahrnehmung des Fahrers angibt, bestimmt werden.

**12.** Verfahren gemäß einem der Ansprüche 1 bis 11,
**dadurch gekennzeichnet, dass**
in Abhängigkeit von der Sichtbarkeit der Objekte in dem Sichtfeld des Fahrers eine Reaktionszeit des Fahrers bestimmt wird und in Abhängigkeit von der bestimmten Reaktionszeit wenigstens eine Funktionseinheit des Fahrzeugs betrieben wird.

**13.** Fahrerassistenzsystem für ein Fahrzeug, wobei das Fahrerassistenzsystem dafür ausgelegt ist, ein Verfahren gemäß einem der vorstehenden Ansprüche durchzuführen.

**14.** Motorfahrzeug mit einem Fahrerassistenzsystem gemäß Anspruch 13.

## Revendications

**1.** Procédé de détermination de la visibilité d'objets dans un champ de vision d'un conducteur d'un véhicule, où une image (48) est capturée au moyen d'un appareil de prise de vues (12) et où, au moyen d'un traitement d'image de l'image (48) capturée par l'appareil de prise de vues (12), une fonction de sensibilité au contraste (16) décrivant le système visuel humain est simulée, laquelle indique des valeurs de seuil d'un contraste perceptible par le système visuel humain en fonction de fréquences (52, 56, 60, 62), où une fréquence respective (52, 56, 60, 62) indique un certain nombre d'alternances (20) de zones claires et sombres (22, 24) liées à une unité d'angle du champ de vision, où la fonction de sensibilité au contraste (16) est approximée en appliquant une pluralité de différences de filtres (54, 58, 66) à l'image (48) capturée par l'appareil de prise de vues (12), où les différences de filtres (54, 58, 66) sont affectées à différentes fréquences (52, 56, 60, 62) de la fonction de sensibilité au contraste (16),
à partir d'une première fréquence (52) de la fonction de sensibilité au contraste (16), au moins une autre fréquence (56, 60, 62) est déterminée sur la base d'une relation prédéterminée entre la première fréquence (52) et les autres fréquences (56, 60, 62) de la fonction de sensibilité au contraste (16), où les différences respectives de filtres (54, 58, 66) sont affectées aux fréquences (52, 56, 60, 62) et, en fonction des différences de filtres (54, 58, 66), la visibilité d'un objet dans le champ de vision du conducteur est déterminée,
tandis que dans une image résultante (78) obtenue en appliquant les différences de filtres (54, 58, 66) à l'image (48) capturée par l'appareil de prise de vues (12), des niveaux de visibilité sont déterminés en déterminant un gradient du contraste par pixel de l'image résultante (78) par rapport à des pixels adjacents, **caractérisé en ce qu'**un angle de vue ($\theta_{hMAX}$) de l'appareil de prise de vues (12) est pris en compte.

**2.** Procédé selon la revendication 1,
**caractérisé en ce que**
la fonction de sensibilité au contraste (16) est approximée par l'application d'une pluralité de différences de Gaussiennes (54, 58, 66) à l'image (48) capturée par l'appareil de prise de vues (12).

**3.** Procédé selon la revendication 1 ou la revendication 2,
**caractérisé en ce que**
à partir de la première fréquence (52) de la fonction de sensibilité au contraste (16) et sur la base d'un paramètre de la relation prédéterminée, les fréquences supplémentaires (56, 60, 62) de la fonction de sensibilité au contraste (16) sont déterminées, fréquences auxquelles sont affectées les différences de filtres (54, 58, 66).

**4.** Procédé selon la revendication 1 ou la revendication 2,
**caractérisé en ce que**
à partir de la première fréquence (52) de la fonction de sensibilité au contraste (16) et sur la base d'un nombre prédéterminé de différences de filtres (54, 58, 66) à appliquer à l'image (48) capturée par l'appareil de prise de vues (12), un paramètre de la relation prédéterminée est déterminé.

5. Procédé selon l'une quelconque des revendications 1 à 4,
   **caractérisé en ce que**
   les fréquences supplémentaires (56, 60, 62) sont déterminées comme termes d'une séquence géométrique.

6. Procédé selon l'une quelconque des revendications 1 à 5,
   **caractérisé en ce que**
   les différences de filtres (54, 58, 66) affectées aux différentes fréquences respectives (52, 56, 60, 62) de la fonction de sensibilité au contraste (16) sont pondérées, de manière à ce que les différences pondérées des filtres (54, 58, 66) approximent la fonction de sensibilité au contraste (16) dans une région des fréquences respectives (52, 56, 60, 62).

7. Procédé selon l'une quelconque des revendications 1 à 6,
   **caractérisé en ce que**
   dans une image résultante (78) obtenue en appliquant les différences de filtres (54, 58, 66) à l'image (48) capturée par l'appareil de prise de vues (12), des contours (80) et/ou des points d'image (82) obtenus au moyen d'une transformation de caractéristiques invariante à l'échelle, ou par d'autres procédés dans un domaine spatial ou dans un domaine d'ondelettes, sont déterminés comme caractéristiques d'image.

8. Procédé selon la revendication 7,
   **caractérisé en ce que**
   une pyramide de différences de filtres est créée par la transformation de caractéristiques invariante à l'échelle, où les différences de filtres affectées à un niveau de pyramide individuel correspondent chacune à différentes fréquences de la fonction de sensibilité au contraste (16), qui sont déterminées comme termes d'une séquence géométrique.

9. Procédé selon la revendication 8,
   **caractérisé en ce que**
   dans chaque niveau de pyramide, des maxima locaux de niveaux de visibilité des pixels sont déterminés par rapport aux pixels adjacents au pixel respectif, en particulier dans le niveau de pyramide du pixel respectif et dans au moins un niveau de pyramide voisin.

10. Procédé selon l'une quelconque des revendications 7 à 9,
    **caractérisé en ce que**
    des niveaux de visibilité sont attribués aux pixels (82) obtenus par la transformation de caractéristiques invariante à l'échelle, dans la détermination desquels un gradient d'un contraste dans un pixel particulier de l'image (78) obtenu en appliquant les différences de filtres (54, 58, 66) à l'image (48) capturée par l'appareil de prise de vues (12) par rapport à des pixels adjacents et un angle de vue ($\theta_{hMAx}$) de l'appareil de prise de vues (12) sont pris en compte.

11. Procédé selon l'une quelconque des revendications 1 à 10,
    **caractérisé en ce que**
    des niveaux de visibilité de pixels dans une image résultante (78) obtenue en appliquant les différences de filtres (54, 58, 66) à l'image (48) capturée par l'appareil de prise de vues (12) sont déterminés conformément à une fonction de sensibilité au contraste spécifique (16) qui indique une perception visuelle typique du conducteur.

12. Procédé selon l'une quelconque des revendications 1 à 11,
    **caractérisé en ce que**
    en fonction de la visibilité des objets dans le champ de vision du conducteur, un temps de réaction du conducteur est déterminé et, en fonction du temps de réaction déterminé, au moins une unité fonctionnelle du véhicule est utilisée.

13. Système d'assistance à la conduite destiné à un véhicule, où le système d'assistance à la conduite est configuré pour exécuter un procédé selon l'une quelconque des revendications précédentes.

14. Véhicule à moteur ayant un système d'assistance à la conduite selon la revendication 13.

Fig.1

Fig.2

Fig.3

Fig.4

Fig.5

Fig.6

Fig.7

Fig.8

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4201070 A1
- DE 102011105074 A1

- US 6711293 B1

**Non-patent literature cited in the description**

- **JOULAN, K. et al.** Contrast Sensitivity Functions for Road Visibility Estimation on Digital Images. IFST-TAR

- **JOULAN, K. et al.** A Unified CSF-based Framework for Edge Detection and Edge Visibility. *Proc. Computer Vision and Pattern Recognition Workshops (CVPRW),* 2001